# EUROPÄISCHE PATENTSCHRIFT

(11) **EP 1 637 449 B1**
(45) Veröffentlichungstag und Bekanntmachung des Hinweises auf die Patenterteilung: **27.08.2008**
(21) Anmeldenummer: 05020104.5
(22) Anmeldetag: 15.09.2005
(51) Int. Cl.: B64C 1/20, B64D 9/00

(54) **Trägersystem zur Aufnahme von Komponenten zum Verschieben, bzw. zur Sicherung von Fracht auf einem Ladedeck**
Support system for components for the positioning and/or securing of cargo on a cargo deck
Système de support de composants servant pour le positionnement et/ou la fixation de fret sur un plancher de soute

(30) Priorität: 15.09.2004 DE 102004044653; 15.09.2004 US 609999 P
(43) Veröffentlichungstag der Anmeldung: 22.03.2006
(73) Patentinhaber: Airbus Deutschland GmbH, 21129 Hamburg (DE)
(72) Erfinder: Kress, André, 28857 Syke (DE); Vogg, Günter, 28307 Bremen (DE); Wieck, Jürgen, 27755 Delmenhorst (DE)
(74) Vertreter: Dilg, Andreas

(56) Entgegenhaltungen:
- EP-A- 0 864 489
- WO-A-98/42566
- WO-A-20/04031033
- DE-A1- 3 927 560
- DE-A1- 19 900 839
- US-A- 2 743 684
- US-A- 3 388 437
- US-A- 4 929 133
- US-A1- 2004 216 982

## Beschreibung

Die Erfindung betrifft ein Trägersystem zur Aufnahme von Komponenten, insbesondere ein kombiniertes Trägersystem zur Aufnahme von Riegelkomponenten, Führungselementen und Transportelementen für ein Frachtladesystem in einem Flugzeugfrachtraum.

Der Einfahrbereich eines Flugzeugfrachtraums ist durch seine omni-direktionale Funktion ein sehr sensibler Bereich. Abgesehen davon, dass ULDs (Unit Load Devices) von einer Querrichtung in eine Längsrichtung oder umgekehrt transportiert werden, müssen auch die Belastungen vom Übergang vom Loader in den Frachtraum aufgefangen werden.

Der heutige Stand der Technik benutzt hierfür Kugelelemente, die in sogenannten Kugelmatten (Ball Mats) zusammengefasst sind und möglichst eine geschlossene Fläche bilden sollen, die lediglich durch notwendige Frachtkomponenten, wie etwa Riegel oder PDUs (Power Drive Units) unterbrochen ist.

EP0864489 (D1) offenbart ein Bodenelement für das Ladedeck eines Flugzeugs, wobei das Bodenelement ausgebildet ist, um Fracht aufzunehmen und zu verschieben. Dabei werden in dem Bodenelement zwischen einer Deckplatte und einer Bodenplatte Profilstäbe angeordnet, die einen Kanal bilden. Der Kanal definiert einen Aufnahmeraum für in Längsrichtung des Bodenelements beabstandete einsetzbare Kugelelemente. Das Bodenelement weist eine Deckplatte auf, die für jedes Kugelelement eine Aufnahmeöffnung bereitstellt.

DE 19900839 (D2) offenbart ein Riegelelement zum Sichern von Containern bzw. von Fracht in einem Flugzeug. Gemäß der D2 wird eine Rollenbahn bereitgestellt, die ein U-Profil bildet, in der Rollen montiert sind.

WO 98/42566 (D3) offenbart eine Kugelmatte zur Aufnahme und zum Verschieben von Fracht in einem Flugzeug. Die Kugelmatte umfasst dabei eine Deckplatte und eine parallel dazu angeordnete Bodenplatte. Kugelelemente können in Aussparungen der Kugelmatte eingesetzt werden.

Die Installation von zusätzlichen ULD-Typen erfordert den Einbau weiterer Frachtkomponenten, wodurch ein Zerschneiden der Kugelmatten erforderlich wird. Dies hat einen erheblichen Änderungsumfang zur Folge, weshalb zusätzliche Frachtkomponentenoptionen sehr schlecht beim Kunden nachgerüstet werden können.

Hinzu kommt, dass die Kräfteeinleitung beispielsweise von Riegelkomponenten in die Struktur einen erheblichen Strukturaufwand zur Folge hat.

Aufgabe der Erfindung ist die Schaffung eines Trägersystems, mit dem es möglich ist, auch nachträglich in einfacher Weise zusätzliche Frachtkomponenten, wie etwa Riegelkomponenten, in ein Frachtladesystem einzubauen, wobei auf die Riegelkomponenten wirkende hohe Kräfte in die Struktur eingeleitet werden können.

Die Lösung der gestellten Aufgabe ist dem Patentanspruch 1 zu entnehmen. Weiterentwicklungen der Erfindung sind in den Unteransprüchen angegeben.

Das erfindungsgemäße Trägersystem bzw. die erfindungsgemäße Struktur enthält zur Aufnahme einer Komponente, beispielsweise einer Riegelkomponente, Führungskomponente oder Transportkomponente, eine Bodenplatte, an der ein Bauteil zur Aufnahme der Komponente befestigt ist. Eine Befestigungsvorrichtung ist fest mit der Bodenplatte (Mill Frame Bodenplatte) verbunden, so dass Kräfte, die auf die Komponente einwirken, in die Struktur eingeleitet werden.

Gemäß einer Weiterbildung der Erfindung weist die Befestigungsvorrichtung eine mit der Bodenplatte fest verbundene Basis (zum Beispiel ein Gehäuse oder eine Aufnahme) auf. Die Basis enthält ein Innengewinde, in welches eine Schraube eindrehbar ist, um eine Komponente bzw. das Trägersystem an der Struktur zu befestigen.

Vorzugsweise enthält die Befestigungsvorrichtung eine Feder, die bei Eindrehen der Schraube in die Basis bzw. in das Gehäuse eine Federkraft auf die Schraube ausübt.

Gemäß einem bevorzugten Ausführungsbeispiel der Erfindung ist die Basis bzw. das Gehäuse der Befestigungsvorrichtung mit der Bodenplatte vernietet. Ein Verschweißen der Basis bzw. des Gehäuses mit der Bodenplatte ist ebenfalls möglich. Das eine Komponente aufnehmende Bauteil ist gemäß einer Weiterbildung der Erfindung ein Frästeil.

Die Bauweise der erfindungsgemäßen Struktur oder Einheit basiert auf einer vorhandenen BM (Ball Mat)-Technologie und ist adaptiert zur Aufnahme von Y-Kräften. Gemäß der Erfindung wird die herkömmliche BM-Technologie derart abgewandelt, dass das Bodenblech inkl. Auflageleiste durch einen Fräsrahmen mit Versteifungsrippen ersetzt wird. Auf dieser Bodengruppe wird ein C-Profil und ein BM-Profil beispielsweise aufgenietet und mit Deckblechen eine geschlossene Oberfläche erstellt.

Gemäß der Erfindung ist keine Strukturänderung einer bereits bekannten BM-Technologie bzw. zur Montage der neuen Technologie notwendig. Ferner werden eine geringere Teileanzahl und somit auch geringere Lagerhaltungskosten beim Kunden erreicht.

Im folgenden wird unter Bezugnahme auf die beigefügten Zeichnungen ein bevorzugtes Ausführungsbeispiel der Erfindung beschrieben. Es zeigen:
Fig. 1A eine Teilseitenansicht des Trägersystems gemäß einem bevorzugten Ausführungsbeispiel der Erfindung;
Fig. 1B eine Teilansicht des Trägersystems gemäß Fig. 1A von oben;
Fig. 2A eine andere Teilseitenansicht des Trägersystems gemäß dem bevorzugten Ausführungsbeispiel der Erfindung;
Fig. 2B eine Teilansicht des Trägersystems gemäß Fig. 2A von unten;
Fig. 3 eine Gesamtansicht des Trägersystems gemäß dem bevorzugten Ausführungsbeispiel;
Fig. 4 eine Querschnittsansicht entlang der Schnittlinie A-A in Fig. 3; und
Fig. 5 eine Ansicht der Mill Frame Bodenplatte gemäß dem bevorzugten Ausführungsbeispiel von unten.

In den Figuren werden gleiche Teile mit gleichen Bezugsziffern gekennzeichnet.

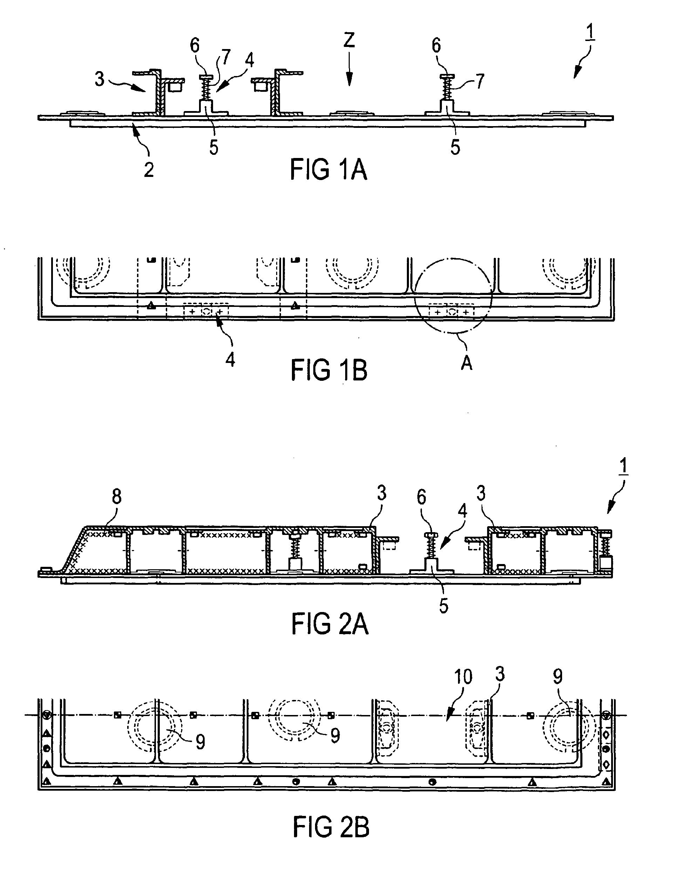

Fig. 1A zeigt eine Teilseitenansicht eines Trägersystems 1 (das auch als Struktur 1 bezeichnet werden kann) gemäß einem bevorzugten Ausführungsbeispiel der Erfindung.

Das erfindungsgemäße Trägersystem 1 weist eine Bodenplatte 2 auf. Auf dieser Bodenplatte 2 sind gemäß dem bevorzugten Ausführungsbeispiel C-Profile 3 mittels Nieten (nicht gezeigt) befestigt. Das C-Profil 3 ist ein Frästeil und dient zur Aufnahme von Riegel-/Führungskomponenten (nicht in Fig. 1A gezeigt).

Fig. 1A zeigt eine Befestigungsvorrichtung 4, die eine Basis bzw. ein Gehäuse 5 enthält. Das Gehäuse 5 ist derart ausgebildet, dass eine Schraube 6 in das Gehäuse eingeschraubt werden kann. Wie in Fig. 1A gezeigt, ist auf die Schraube 6 eine Feder 7 aufgesteckt, so dass beim Eindrehen der Schraube 6 in das Gehäuse 5 eine Federkraft erzeugt wird, die der Eindrehrichtung entgegenwirkt.

Durch Eindrehen der Schraube 6 in die Basis 5 wird eine BM (Ball Mat (Kugelmatte)), nicht in Fig. 1A gezeigt, mit der Bodenplatte 2 verschraubt. Über die Bodenplatte 2 werden dadurch Kräfte, die auf die BM wirken, in das Trägersystem 1 abgeleitet.

Fig. 1B zeigt eine Teilansicht des Trägersystems 1 gemäß Fig. 1A von oben mit zwei Befestigungsvorrichtungen 4 an einer Seite des Trägersystems 1.

Fig. 2A zeigt eine andere Teilansicht des Trägersystems 1 gemäß dem bevorzugten Ausführungsbeispiel der Erfindung. Die Fig. 2A zeigt eine Bodenplatte 2, auf die C-Profile 3 genietet sind. Die C-Profile dienen wiederum zur Aufnahme von Komponenten, beispielsweise Riegelkomponenten, Führungskomponenten, wobei auf die Profile wirkende Kräfte in das Trägersystem 1 eingeleitet werden. In Fig. 2A ist zur besseren Übersicht keine der genannten Komponenten gezeigt.

Eine BM wird mittels der Schraube 6 der Befestigungsvorrichtung 4 durch Eindrehen in die Basis 5 der Befestigungsvorrichtung 4 an die Struktur 1 bzw. an eine Flugzeugstruktur geschraubt (befestigt).

Fig. 2A zeigt ferner Abdeckbleche 8, die dazu dienen, eine geschlossene Oberflächenstruktur zu erzeugen.

Fig. 2B zeigt eine Teilansicht des Trägersystems gemäß Fig. 2A von unten. Wie in den Bereichen 9 in Fig. 2B angedeutet, werden dort beispielsweise Kugelelemente (Ball Transfer Units) eingesetzt. In einen Bereich 10, wie in Fig. 2B gezeigt, kann beispielsweise eine Riegelkomponente eingesetzt werden. Die Riegelkomponente wird vorzugsweise in den C-Profilen eingesetzt, eingeklinkt oder vernietet.

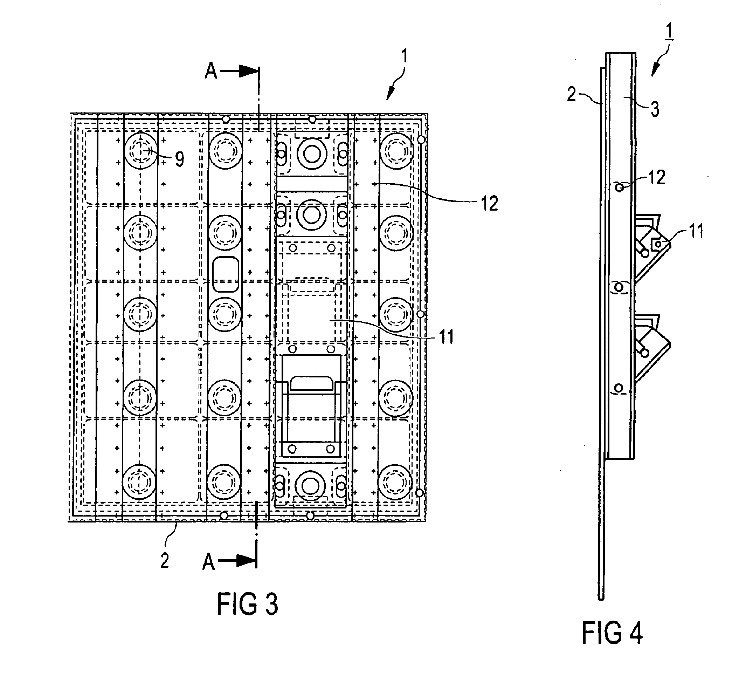

Fig. 3 zeigt eine Gesamtansicht auf ein Trägersystem 1 gemäß dem bevorzugten Ausführungsbeispiel, wobei die Bodenplatte 2, beispielsweise ein Frästeil, im wesentlichen quadratisch ausgebildet ist. Die Geometrie des Frästeils ergibt sich aus den Einbaubedingungen und ist nicht obligatorisch.

Das Trägersystem 1 enthält eine Mehrzahl von Transportelementen (beispielsweise Kugelelemente, sogenannte BTUs (Ball Transfer Units)) 9. In einem Bereich 10 des Trägersystems 1 sind zwei Riegelkomponenten 11 gezeigt.

Wie in Fig. 4 verdeutlicht, die eine Querschnittsansicht entlang der Schnittlinie A-A in Fig. 3 darstellt, sind die Riegelkomponenten 11 in den C-Profilen 3 eingeklinkt.

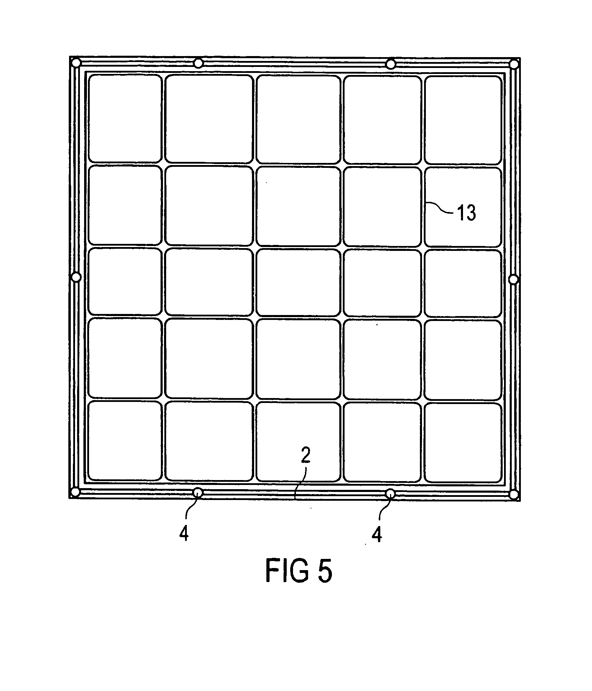

Fig. 5 zeigt die Bodenplatte (Mill Frame Bodenplatte) 2 von unten. Gemäß diesem Ausführungsbeispiel ist die Bodenplatte 2 als Rahmen ausgebildet, der ein Frästeil ist. Die Bodenplatte 2 weist eine Mehrzahl von Aussteifungen (oder Verstrebungen) 13 auf, die im wesentlichen die Bodenplatte 2 in Quadrate unterteilen. Der Rand der Bodenplatte 2 ist zur Aufnahme der Befestigungsvorrichtung 4 ausgebildet, wie oben beschrieben.

Obwohl die Erfindung im Vorangegangenen unter Bezugnahme auf ein bevorzugtes Ausführungsbeispiel beschrieben wurde, ist es selbstverständlich, dass Modifikationen vorgenommen werden können, ohne den Schutzbereich der Erfindung zu verlassen, so lange eine herkömmliche BM-Bauweise derart adaptiert wird, dass ein gefräster Trägerrahmen (Bodenplatte) integriert wird, um hohe Kräfte, die beispielsweise auf Riegelkomponenten wirken, in die Struktur einzuleiten.

### Bezugszeichenliste:

- 1: Trägersystem
- 2: Bodenplatte
- 3: C-Profil
- 4: Befestigungsvorrichtung
- 5: Gehäuse
- 6: Schraube
- 7: Feder
- 8: Abdeckblech
- 9: Kugelelement (Bereich)
- 10: Riegelkomponentenbereich
- 11: Riegelkomponente
- 12: Nieten
- 13: Aussteifungen

## Patentansprüche

1. Trägersystem für einen Flugzeugfrachtraum zur Aufnahme einer Komponente (9, 11), enthaltend:
einen Fräsrahmen (2) mit Versteifungsrippen (13);
eine mit dem Fräsrahmen (2) fest verbundene Befestigungsvorrichtung (4);
eine Komponente (9, 11), insbesondere eine Riegelkomponente, Führungskomponente oder Transportkomponente;
welche Komponente (9, 11) nachträglich und gegebenenfalls wieder lösbar einbaubar ist;
ein an dem Fräsrahmen (2) befestigtes Bauteil (3);
wobei das Bauteil (3) derart eingerichtet ist, dass die Komponente (9, 11) durch das Bauteil aufnehmbar ist;
wobei die Befestigungsvorrichtung (4) derart eingerichtet ist, dass die Komponente (9, 11) gegebenenfalls lösbar, aber in jedem Fall auch derart befestigbar ist, dass auf die Komponente (9, 11) wirkende Kräfte in das Trägersystem eingeleitet werden.

2. Trägersystem nach Anspruch 1, wobei die Befestigungsvorrichtung (4) eine mit dem Fräsrahmen (2) fest verbundene Basis (5) enthält, in welche eine Schraube (6) eindrehbar ist, um die Komponente (9, 11) oder das Trägersystem an die Flugzeugstruktur zu befestigen.

3. Trägersystem nach Anspruch 2, wobei die Befestigungsvorrichtung (4) eine Feder (7) und eine Schraube (6) enthält, die bei Eindrehen der Schraube (6) eine Federkraft erzeugt, die der Eindrehrichtung der Schraube (6) entgegenwirkt.

4. Trägersystem nach Anspruch 2 oder 3, wobei die Basis (5) der Befestigungsvorrichtung (4) mit dem Fräsrahmen (2) vernietet ist.

5. Trägersystem nach einem der vorangegangenen Ansprüche, wobei das Bauteil (3) ein Frästeil zur Aufnahme der Komponente (9, 11) ist, und mit dem Fräsrahmen (2) vernietet ist.

6. Trägersystem nach einem der vorangegangenen Ansprüche, wobei die Komponente (9, 11) mindestens eine Riegelkomponente (11), ein Führungselement und/oder Transportelemente (9) enthält.

7. Trägersystem nach Anspruch 5, wobei das Frästeil (3) ein C-Profil enthält zur Aufnahme von Riegelkomponenten (11) und/oder Führungselementen (9).

8. Trägersystem nach Anspruch 7, wobei das Frästeil (3) ein Ball Mat-Profil enthält zur Aufnahme von Transportelementen.

9. Trägersystem nach einem der vorangegangenen Ansprüche, enthaltend ein Deckblech (8) zur Bildung einer geschlossenen Oberfläche der Struktur 1.

## Claims

1. Carrier system for an aircraft hold for receiving a component (9, 11), comprising:
a mill frame (2) with reinforcing ribs (13);
a fastening device (4) firmly connected to the mill frame (2);
a component (9, 11), in particular a locking component,
guide component or transport component;
with it being possible to install said component (9, 11) subsequently and optionally detachably;
a member (3) attached to the mill frame (2);
wherein the member (3) is set up so that the component (9, 11) can be received by the member;
wherein the fastening device (4) is set up in such a way that the component (9, 11) is optionally detachable but in any case can be fastened in such a way that forces acting on the component (9, 11) are introduced into the carrier system.

2. Carrier system according to claim 1, wherein the fastening device (4) comprises a base (5) which is firmly connected to the mill frame (2) into which a screw (6) can be screwed in order to fasten the component (9, 11) or the carrier system to the aircraft structure.

3. Carrier system according to claim 2, wherein the fastening device (4) comprises a spring (7) and a screw (6) which, when the screw (6) is screwed in, generates a spring force which counteracts the screw-in direction of the screw (6).

4. Carrier system according to claim 2 or 3, wherein the base (5) of the fastening device (4) is riveted to the mill frame (2).

5. Carrier system according to any one of the preceding claims, wherein the member (3) is a milled part for receiving the component (9, 11) and is riveted to the mill frame (2).

6. Carrier system according to any one of the preceding claims, wherein the component (9, 11) comprises at least a locking component (11), a guiding element and/or transport elements (9).

7. Carrier system according to claim 5, wherein the milled part (3) comprises a C-profile for receiving locking components (11) and/or guiding elements (9).

8. Carrier system according to claim 7, wherein the milled part (3) has a ball mat profile for receiving transport elements.

9. Carrier system according to any one of the preceding claims comprising a cover sheet (8) to form an enclosed surface of the structure 1.

## Revendications

1. Système de support pour une soute d'avion destiné à recevoir un composant (9, 11) comportant :
un châssis (2) comportant des nervures de raidissement (13);
un dispositif de fixation (4) relié fermement au châssis (2);
un composant (9, 11), en particulier un composant de verrouillage, un composant de
guidage ou un composant de transport;
lequel composant (9, 11) peut être monté ultérieurement et le cas échéant de manière amovible;
une pièce de construction (3) fixée au châssis (2)
la pièce de construction (3) étant aménagée de telle façon que le composant (9, 11) peut être reçu par la pièce de construction;
le dispositif de fixation (4) étant aménagé de telle façon que le composant (9, 11) est le cas échéant amovible, mais peut dans tout les cas également être fixé de telle façon que les forces qui agissent sur le composant (9, 11) sont transmises au système de support.

2. Système de support selon la revendication 1, dans lequel le dispositif de fixation (4) comprend un socle (5) fermement relié au châssis (2), dans lequel il est possible de visser une vis (6) pour fixer le composant (9, 11) ou le système de support à la structure de l'avion.

3. Système de support selon la revendication 2, dans lequel le dispositif de fixation (4) comprend un ressort (7) et une vis (6) et qui, lors du vissage de la vis (6), génère une force de ressort qui s'oppose à la direction de rotation de la vis (6).

4. Système de support selon la revendication 2 ou 3, dans lequel le socle (5) du dispositif de fixation (4) est riveté au châssis (2).

5. Système de support selon l'une des revendications précédentes, dans lequel la pièce de construction (3) est une pièce destinée à recevoir le composant (9, 11) et est rivetée au châssis (2).

6. Système de support selon l'une des revendications précédentes, dans lequel le composant (9, 11) comprend au moins un composant de verrouillage (11), un composant de guidage et/ou des composants de transport (9).

7. Système de support selon la revendication 5, dans lequel la pièce (3) comprend un profilé en C destiné à recevoir des composants de verrouillage (11), et/ou des composants de guidage (9).

8. Système de support selon la revendication 7, dans lequel la pièce (3) comprend un profilé à billes pour recevoir des éléments de transport.

9. Système de support selon l'une des revendications précédentes, comprenant une tôle de couverture (8) pour former une surface continue de la structure 1.
